(19) Europäisches Patentamt
European Patent Office
Office européen des brevets

(11) **EP 2 171 239 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: 08774944.6

(22) Anmeldetag: **09.07.2008**

(51) Int Cl.:
*F23R 3/28* (2006.01)    *F02C 9/28* (2006.01)
*F02C 7/228* (2006.01)    *F23R 3/26* (2006.01)

(86) Internationale Anmeldenummer:
**PCT/EP2008/058939**

(87) Internationale Veröffentlichungsnummer:
**WO 2009/013136 (29.01.2009 Gazette 2009/05)**

(54) **VERFAHREN ZUM BETRIEB EINER VERBRENNUNGSVORRICHTUNG SOWIE VERBRENNUNGSVORRICHTUNG ZUR DURCHFÜHRUNG DES VERFAHRENS**

METHOD FOR OPERATING A COMBUSTION DEVICE, AND COMBUSTION DEVICE FOR CARRYING OUT THE METHOD

PROCÉDÉ POUR FAIRE FONCTIONNER UN DISPOSITIF DE COMBUSTION AINSI QUE DISPOSITIF DE COMBUSTION POUR METTRE EN OEUVRE CE PROCÉDÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.07.2007   CH 11762007**

(43) Veröffentlichungstag der Anmeldung:
**07.04.2010   Patentblatt 2010/14**

(73) Patentinhaber: **Alstom Technology Ltd 5400 Baden (CH)**

(72) Erfinder:
• **MOHR, Wolfgang Franz Dietrich**
  **8166 Niederweningen (CH)**
• **AUBRY, Jérôme André**
  **5430 Wettingen (CH)**
• **STEINBACH, Christian**
  **5413 Birmenstorf (CH)**
• **ULIBARRI, Nicolas**
  **5430 Wettingen (CH)**

(56) Entgegenhaltungen:
EP-A- 0 529 900        WO-A-00/52315
US-A- 5 365 732        US-A1- 2004 011 052
US-A1- 2007 119 147

EP 2 171 239 B1

**Beschreibung**

TECHNISCHES GEBIET

Die vorliegende Erfindung bezieht sich auf das Gebiet der Verbrennungstechnik, insbesondere für Gasturbinen. Sie betrifft ein Verfahren zum Betrieb einer Verbrennungsvorrichtung gemäss dem Oberbegriff des Anspruchs 1 sowie eine Verbrennungsvorrichtung zur Durchführung des Verfahrens.

STAND DER TECHNIK

In Brennkammern mit mehreren parallel arbeitenden Brennern, wie in Gasturbinen, Kolbenmotoren und Boilern vorkommen, werden zur Maximierung der Lebensdauer und zur Minimierung des Schadstoffausstosses die Flammentemperaturen der einzelnen Brenner abgeglichen, respektive homogenisiert. Diese Homogenisierung wird üblicherweise konstruktiv durch einen möglichst identischen Aufbau der einzelnen Brennkammern und deren Brennstoffzufuhr erreicht. Dennoch ergeben sich bei der realisierten Anlage durch das Zusammenspiel von topologischen Unterschieden und etlichen toleranzbedingten Abweichungen teilweise Temperaturunterschiede zwischen den Brennern, welche über dem tolerierten Wert liegen.

Diese herstellungsbedingten Unterschiede zwischen den einzelnen Brennern können durch eine einmalige Homogenisierung korrigiert werden. Hierzu werden die Flammentemperaturen der einzelnen Brenner gemessen und durch eine passive Drosselung der Brennstoffzuführungen ausgeglichen (siehe z.B. die WO-A1-2005/010437). Als Messmethode zur Flammentemperaturbestimmung stehen zurzeit folgende bekannte Methoden zur Verfügung:

- Die Berechnung der adiabatischen Flammentemperatur anhand von spektroskopischen Messungen (siehe z.B. die US-A-6,318,891).
- Durch indirekte Messung über

  - ○ die Wandtemperatur des Brenners
  - ○ dem $NO_x$-Ausstosses des Brenners
  - ○ dem $CO_2$- bzw. $O_2$-Gehalt des Brenngases (Lambda-Sonde).

Die Messung der Temperatur über die Chemilumineszenzintensität der Flamme, beispielsweise der Chemilumineszenz der $NO_x$-Moleküle (siehe z.B. die US-A-5,670,784).

Der Optimierungsprozess scheitert in der Praxis oft an der grossen Anzahl der zu optimierenden, eventuell auch in mehreren Brennkammern untergebrachten Brenner, deren Flammentemperatur gleichzeitig nur sehr langsam bestimmt werden kann. Die oben erwähnten Methoden zur Bestimmung der Flammentemperatur benötigen bis auf die Chemilumineszenzintensitäts-Methode eine typische Messdauer von etwa zehn Sekunden bis zu einer Minute. Diese Zeit muss mit dem Aufwand für eine Homogenisierung eines Mehrbrennersystems verglichen werden. Eine Homogenisierung von N Brennern entspricht bei einer gegenseitigen Beeinflussung der Brenner einer Optimierung eines Systems mit N Parametern. Der Messaufwand für eine solche Optimierung bewegt sich selbst bei effizienten Methoden in der Grössenordnung von $N^2$. Dies führt dazu, dass für einen vollständigen Abgleich einer Anlage mit 50 Brennern mehr als ein Tag benötigt wird.

Die Temperaturbestimmung anhand der Intensität der Chemilumineszenz wurde sehr früh vorgeschlagen. Die von der Optik gesammelte Intensität der Chemilumineszenz I hängt über ein modifiziertes Arrhenius-Gesetz von der Flammentemperatur T ab:

$$(1) \qquad I(T) = A \cdot \Phi_0 \exp\!\left(\frac{T - T_0}{\tau}\right).$$

Hierin bezeichnet $\Phi_0$ die Strahlungsdichte für eine Flamme bei der Temperatur To. Diese Intensität hängt wie der charakteristische Wert $\tau$ von der Zusammensetzung des Brennstoffes und dem Druck ab. Die gemessene Intensität I wird allerdings auch durch die Transmissivität und die Apertur der Optik bestimmt, welche in dem Flächenparameter A zusammengefasst sind. Sind alle Parameter bekannt, so kann die Temperaturbestimmung anhand der Intensität der Chemilumineszenz sehr schnell durchgeführt werden. Selbst bei Brennern unter Druck (30bar) und bei Temperaturen von 1200 °C reicht die Chemilumineszenzintensität aus, um mit einer Frequenz bis zu 10 kHz gemessen zu werden.

In der Praxis ist die Temperaturbestimmung über die Intensität der Chemilumineszenz untauglich, da die Chemilumineszenz sehr empfindlich von der Zusammensetzung der Luft (Feuchtigkeit), des Brennstoffes, sowie dem Druck in der Brennkammer abhängt. Selbst die Beschränkung auf einzelne Wellenlängenbereiche wie OH*, CH* oder NO* bringt hierbei keinerlei Verbesserung, da die Abhängigkeit von der Brennstoffzusammensetzung bei jedem Radikal auftritt. Zudem leidet eine Intensitätsbestimmung immer an einem Transmissionsverlust der Optik durch Beschlag, der bei Verbrennungsprozessen schnell einmal eintreten kann.

Aus der Druckschrift EP-A-0 529 900 ist eine Gasturbine und ein Verfahren zu deren Betrieb bekannt, bei dem das Brennstoff-Luft-Verhältnis für jeden einer Vielzahl von Brennern mittels bestimmter Stellglieder in Abhängigkeit von gemessenen Werten und der vorher bestimmten Verbrennungscharakteristik des jeweiligen Brenners eingestellt und geregelt wird. Dies wird insbesondere durch eine so genannte IFC-Steuerung erreicht, die über ein Einstellelement den Massenstrom der Vormischluft für den Brenner einstellt. Die gegenseitige Beeinflussung der Brenner wird dabei nicht berücksichtigt.

Andere Arten der Regelung der Brennstoffzufuhr sind beispielsweise aus der US-A-2004011052 oder der WO-A-0052315 bekannt.

DARSTELLUNG DER ERFINDUNG

Es ist Aufgabe der Erfindung, ein Verfahren zum Betrieb einer Verbrennungsvorrichtung mit einer Mehrzahl von Brennern zu schaffen, welches schnell zu einem Ausgleich der Unterschiede in den einzelnen Brennern und damit schnell zu einem optimierten Betrieb der Vorrichtung führt, sowie eine dazu geeignete Verbrennungsvorrichtung anzugeben.

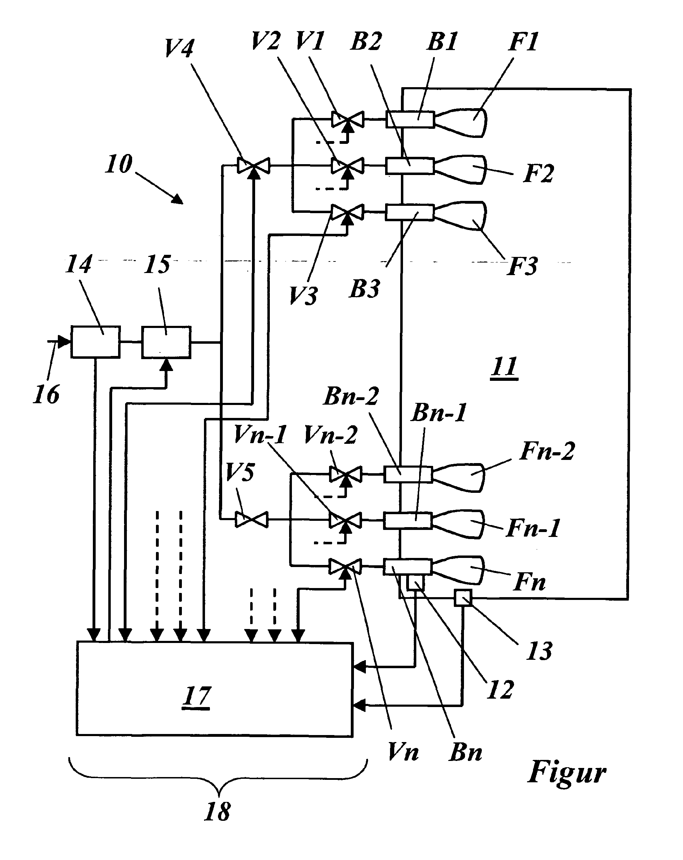

Die Aufgabe wird durch die Gesamtheit der Merkmale der Ansprüche 1 und 11 gelöst. Die Erfindung geht dabei von einem System mit den folgenden Komponenten aus, wie es in der einzigen Figur wiedergegeben ist:

• Eine Verbrennungsvorrichtung 10 mit einer (oder mehreren) zu regulierenden oder einmalig abzugleichenden Brennkammer(n) 11 mit mehreren Brennern B1,..,Bn, die über ein Brennstoffverteilsystem 18 mit Brennstoff versorgt werden und entsprechende Flammen F1,..,Fn erzeugen.

• Für jeden Brenner B1,..,Bn eine Vorrichtung zur direkten oder indirekten Bestimmung seiner Flammentemperatur. In der Figur ist für einen der Brenner (Fn) beispielhaft eine intensitätsunabhängige Temperaturmesseinrichtung 12 und eine auf der Chemilumineszenzintensität basierende Temperaturmesseinrichtung 13 eingezeichnet.

• Stellglieder wie verstellbare Düsen, Blenden, Drosseln, Ventile, oder Durchflussregler zur manuellen oder gesteuerten Regulierung der Brennstoffzufuhr oder Brennstoffzusammensetzung von einzelnen Brennern oder Gruppen von Brennern, die in der Figur durch die zwischen der Brennstoffzufuhr 16 und den Brennern B1,..,Bn angeordneten, für einzelne Brenner oder Brennergruppen zuständigen Ventile V1,..,Vm und die Steuerung 17 symbolisiert werden (die Anzahl der Stellglieder kann dabei von der Anzahl der Brenner verschieden sein).

• Allfällige Messwertaufnehmer wie Sensoren, Geräte und Vorrichtungen zur Bestimmung von Temperatur, Druck, Dichte, Durchfluss, Zähigkeit, Wärmeleitfähigkeit oder auch Zusammensetzung des Brennstoffes, für die in der Figur beispielhaft die Messeinrichtung M1 und M2 für den Brennstoff eingezeichnet sind. Eine weitere Messeinrichtung M3 in Form einer Lambdasonde ist in einem Abgasauslass 14 der Brennkammer 11 angeordnet.

• Allfällige autonome Regeleinheiten wie Durchflussregler, Druckregler, Temperaturregler, oder Regler zur Festlegung der Brennstoffzusammensetzung, die in der Figur beispielhaft mit einer Brennstoffregeleinrichtung 15 dargestellt sind.

• Eine vereinfachte Systemanalyse des Leitungssystems der Brennstoffzufuhr, welche die Abhängigkeit der Brennstoffdurchflüsse als Funktion der Position der Stellglieder und der autonomen Regeleinheiten beschreibt. Die Systemanalyse berücksichtigt zur Verbesserung der Berechnung der Brennstoffdurchflüsse auch die Messwerte von allfälligen Messwertaufnehmern. Diese Systemanalyse kann beispielsweise durch eine Druckverlustrechnung bewerkstelligt sein, bei der der Durchfluss eines Ventils aus der Ventilposition und dem Druckabfall über das Ventil beschrieben wird. Der hierzu benötigte positionsabhängige Widerstandsbeiwert muss als Kennlinie des Ventils bekannt sein.

• Ein Algorithmus zur Minimierung des Schadstoffausstosses oder zur Homogenisierung der Flammentemperaturen.

Wesentlich für die Erfindung ist die vereinfachte Systemanalyse, bei der zur schnellen Optimierung bzw. Homogenisierung der Verbrennungsvorrichtung eine Funktion der Flammentemperaturen der Brenner in Abhängigkeit von den Positionen der Stellglieder des Brennstoffverteilsystems bereitgestellt wird, welche durch Messungen der Flammentemperaturen bei mehreren vorgegebene Positionen der Stellglieder des Brennstoffverteilsystems kalibriert worden ist, und durch die mit Hilfe der kalibrierten Funktion die für eine vorgegebene Verteilung der Flammentemperaturen der Brenner optimalen Positionen der Stellglieder des Brennstoffverteilsystems ermittelt und eingestellt werden.

Eine Ausgestaltung des Verfahrens nach der Erfindung ist dadurch gekennzeichnet, dass die Verbrennungsvorrichtung eine Messeinrichtung zur Bestimmung der Eigenschaften des Brennstoffes wie Temperatur, Druck, Dichte, Durchfluss, Zähigkeit, Wärmeleitfähigkeit und Zusammensetzung aufweist, und dass die Messwerte der Messeinrichtung als Variable in die Funktion der Flammentemperaturen einbezogen werden.

Eine Weiterbildung des Verfahrens zeichnet sich dadurch aus, dass die Verbrennungsvorrichtung eine Brennstoffregeleinrichtung zur autonomen Regelung der Eigenschaften des Brennstoffes wie Durchfluss, Druck, Temperatur oder Zusammensetzung aufweist, und dass die Funktion in Abhängigkeit von den Regelwerten der Brennstoffregeleinrichtung aufgestellt wird.

Eine andere Ausgestaltung des erfindungsgemässen Verfahrens ist dadurch gekennzeichnet, dass jedem Brenner im Brennstoffverteilsystem ein Ventil mit einer festen Kennlinie vorgeschaltet ist, und dass zur Ermittlung der Funktion die zu erwartende Flammentemperatur des jeweiligen Brenners als proportional zum Brennstoffzufluss durch das ihm vorgeschaltete Ventil angenommen wird.

Eine weitere Ausgestaltung des erfindungsgemässen Verfahrens ist dadurch gekennzeichnet, dass zunächst die Flammentemperaturen der Flammen der einzelnen Brenner gemessen werden, und dass nach Massgabe der gemessenen Flammentemperaturen die Verbrennungsvorrichtung homogenisiert wird.

Eine andere Ausgestaltung des erfindungsgemässen Verfahrens zeichnet sich dadurch aus, dass zunächst die Flammentemperaturen der Flammen der einzelnen Brenner gemessen werden, und dass nach Massgabe der gemessenen Flammentemperaturen die Verbrennungsvorrichtung optimiert wird.

Eine weitere Ausgestaltung des erfindungsgemässen Verfahrens ist dadurch gekennzeichnet, dass zunächst die Flammentemperaturen der Flammen der einzelnen Brenner gemessen werden, und dass nach Massgabe der gemessenen Flammentemperaturen die Verbrennungsvorrichtung im Hinblick auf eine fortlaufende Optimierung geregelt wird.

Insbesondere können dabei die Flammentemperaturen der Flammen der einzelnen Brenner über eine Messung der Chemilumineszenzintensität bestimmt werden.

Besonders vorteilhaft ist es, wenn die Messung der Chemilumineszenzintensität in periodischen Zeitabständen durch eine intensitätsunabhängiges Verfahren zur Messung der Flammentemperatur rekalibriert wird, wobei als intensitätsunabhängiges Rekalibrierungsverfahren ein Verfahren zur Messung der Flammentemperatur verwendet wird, welches auf einer Durchflusskennlinie der für den Brennstoffdurchfluss verantwortlichen Stellglieder beruht.

Eine vorteilhafte Ausgestaltung der erfindungsgemässen Verbrennungsvorrichtung ist dadurch gekennzeichnet, dass das Brennstoffverteilsystem eine Brennstoffmesseinrichtung zur Bestimmung der Eigenschaften des Brennstoffes wie Temperatur, Druck, Dichte, Durchfluss, Zähigkeit, Wärmeleitfähigkeit und Zusammensetzung und eine Brennstoffregeleinrichtung zur autonomen Regelung der Eigenschaften des Brennstoffes wie Durchfluss, Druck, Temperatur oder Zusammensetzung aufweist, welche mit der Steuerung verbunden sind.

Insbesondere ist jedem der Brenner als Stellglied ein Ventil zur Einstellung des Brennstoffdurchflusses zum zugehörigen Brenner zugeordnet, wobei die Ventile mit der Steuerung verbunden sind.

## KURZE ERLÄUTERUNG DER FIGUREN

Die Erfindung soll nachfolgend anhand von Ausführungsbeispielen im Zusammenhang mit der Zeichnung näher erläutert werden. Die einzige Figur zeigt ein stark vereinfachtes Anlagenschema einer Verbrennungseinrichtung gemäss einem Ausführungsbeispiel der Erfindung.

## WEGE ZUR AUSFÜHRUNG DER ERFINDUNG

Da Flammentemperaturen sehr empfindlich auf kleinste Abweichungen der Brennstoff- und Luftdurchflüsse reagieren, genügen selbst aufwendige Rechnungen nicht, um die Flammentemperatur eines einzelnen Brenners genügend genau vorher berechnen zu können. Die Abweichungen können durch eine zusätzliche Messung der Flammentemperatur bestimmt und korrigiert werden. Da derartige Messungen jedoch viel Zeit beanspruchen, dauert eine vollständige Optimierung einer Anlage mit mehreren Brennern oftmals zu lang, um wirtschaftlich zu sein.

Hier setzt die Erfindung ein, da sie diesen Einstellprozess durch zwei Strategien wesentlich beschleunigt: Die erste Strategie verkürzt die Bestimmung der Flammentemperatur auf unter eine Sekunde und die zweite Strategie verkürzt den Optimierungsprozess auf eine Bestimmung von wenigen Parametern zur Berechnung der Flammentemperatur, deren Anzahl proportional zur Anzahl der Brenner ist.

Durch die Kombination dieser beiden Strategien wird der Homogenisierungsprozesses so schnell, dass der Abgleich der Flammentemperaturen nicht nur periodisch sondern sogar konstant geregelt erfolgen kann.

Die neue Idee zur Beschleunigung der Flammentemperaturbestimmung ist eine permanent rekalibrierte Chemilumineszenzintensitätsmessung. Bei dieser werden die Vorteile von zwei etablierten Messmethoden kombiniert. Die Nachteile der Intensitätsmessmethode können durch eine Kombination mit einer intensitätsunabhängigen Temperaturmessung abgefangen werden, mit welcher die Intensitätsmessung regelmässig, z.B. im Zehn-Minuten-Takt, rekalibriert wird.

Aus praktischen Gründen wird zwischen Oszillationen der Intensität von turbulenten Flammen und kurzzeitigen Flammentemperaturschwankungen unterschieden. Als Oszillationen gelten Veränderungen der Intensität der Chemilumineszenz, welche schneller als eine bestimmte Grenzfrequenz (bei der Gasturbine etwa 8 Hz) stattfinden. Während langsamere Veränderungen als Veränderung der Flammentemperaturen interpretiert werden. Die Grenzfrequenz wird dabei durch die Zeitverzögerung über die Regelstrecke zwischen dem Stellglied der Brennstoffzufuhr und der Flamme bestimmt. Frequenzen mit Perioden unter dieser Zeitverzögerung werden als Oszillation interpretiert.

Die neue Idee zur Beschleunigung der Optimierung besteht darin, das System durch eine vollständige Analyse auf eine analytische Funktion F der Art

$$(2) \qquad T = F(s, x, y)$$

zurückzuführen. Hierin bezeichnet T einen N-dimensionalen Vektor, der die Flammentemperaturen der einzelnen Brenner enthält. Der M-dimensionale Vektor s enthält die Positionen der Stellglieder. Idealerweise gibt es für jeden Brenner nur ein Stellglied, wodurch N gleich M ist. In der Praxis wird jedoch meist M>N gewählt. Der K-dimensionale Vektor x beinhaltet die Messwerte der allfälligen Messwertaufnehmer sowie die Regelwerte der allfälligen autonomen Regeleinheiten. Da diese Messgrössen möglicherweise gar nicht erhoben werden, kann die Dimension K somit auch 0 sein. Weiterhin enthält die Systemanalyse L geschätzte Abweichungen, welche im L-dimensionalen Vektor y zusammengetragen sind. Dies können beispielsweise die Abweichungen der Druckdifferenzen sein, welche den Durchfluss beeinflussen. Diese unbekannten Abweichungen führen dazu, dass die Funktion F im Falle von N=M nicht direkt nach s aufgelöst werden kann. Das System muss deshalb zuerst kalibriert werden. Die Kalibrierung wird dadurch erreicht, dass das System bei n verschiedenen Einstellungen $s^i$ geprüft wird. Hierbei wird unter $s^i$ wieder der M-dimensionale Vektor aller M Stellglieder verstanden. Für jeden Stellvektor muss nun der sich ergebene Temperaturvektor $T^i$ zusammen mit den Messwerten der Messwertaufnehmer und der Regelwerte der autonomen Regeleinheiten $x^i$ bestimmt werden. Mit den Messresultaten können die Abweichungen y dann durch einen gewichteten $X^2$-Anpassungstest ermittelt werden. Hierzu wird die Grösse

$$(3) \qquad \chi^2(y) = \sum_{i=1}^{n} (F(s^i, x^i, y) - T^i)^T V_T^{-1} (F(s^i, x^i, y) - T^i)$$

durch eine Variation von y minimiert. Dabei steht $V_T$ für die N x N-dimensionale Gewichtungsmatrix, welche sich aus der statistischen Präzision der Temperaturmessung ergibt. Die Minimierung kann schnell durchgeführt werden, da F eine analytische Funktion ist, deren Ableitung sich berechnen lässt. Hierdurch kann vermittels einer iterativen numerischen Methode und einer hinreichend grossen Anzahl von Messungen n·N>L ein optimales $y^{min}$ gefunden werden. Mit bekanntem $y^{min}$ ist das System kalibriert.

Mit dem kalibrierten System kann für beliebige Regelwerte x die optimale Positionen $s_{min}(x)$ der Stellglieder für die gewünschten Temperaturen $T^h$ bestimmt werden. Hierzu wird durch einen $X^2$-Anpassungstest die Grösse

$$(4) \qquad \chi^2(y) = \sum_{i=1}^{n} (F(s, x, y^{min}) - T^h)^T V_T^{-1} (F(s, x, y^{min}) - T^h)$$

durch eine Variation von s minimiert. Der sich numerisch ergebende Wert $s^{min}(x, T^h)$ liefert dann die gesuchten Positionen.

Zusammengefasst wird die zu bewältigende Messaufgabe auf n·N>L Kalibrierungsmessungen reduziert. Die eigentliche Optimierung ergibt sich dann ohne weitere Messungen durch ein rein numerisches Verfahren.

Nachfolgend soll dieses Verfahren an einem vereinfachten Beispiel erläutert werden:

Es soll ein vereinfachtes System ohne allfällige Sensoren oder autonome Regeleinheiten mit K=0 untersucht werden. Das System soll aus N Brennern B1,..,Bn bestehen. Jedem Brenner B1,..,Bn ist in seiner Brennstoffzufuhr ein Ventil V1,..,V3; Vn-2,..,Vn mit einer festen Kennlinie $\xi(s)$ vorgelagert.

$$(5) \qquad \Delta p = \zeta(s) \cdot \frac{\rho}{2} v^2 .$$

Der Brennstoff soll hierbei über einen Druckregulierer auf den Druck $\rho_1$ reduziert werden, von wo aus der Brennstoff durch ein Verteilersystem den Ventilen V1,..,V3; Vn-2,..,Vn zugeführt wird. Die Druckabfälle in diesem Verteiler werden vernachlässigt. Ebenso werden die Druckunterschiede in der gemeinsamen Brennkammer 11 mit Druck $\rho_2$ vernachlässigt, sodass die Druckabfälle $\rho_1$-$\rho_2$ für alle Brenner der Brennkammer identisch sind. Hieraus ergibt sich für baugleiche Ventile mit dem Rohrquerschnitt A der Durchfluss q zu

$$(6) \qquad q(s) = A \sqrt{\frac{2\rho(p_1 - p_2)}{\zeta(s)}} .$$

Vereinfachend wird jetzt angenommen, dass die zu erwartende Flammentemperatur proportional zu diesem Brennstoffzufluss ist, respektive, dass höhere Terme vernachlässigt werden können:

$$(7) \qquad T_k = T^r + a \cdot (q(s_k) - q(s^r)) = F_k(s_k) .$$

Hierin summiert *a* den Brennwert des Brennstoffes, dessen spezifische Wärme, die spezifische Wärme der Zuluft, sowie die Luftzahl der Verbrennung. Gleichung (7) ist die gesuchte Systemfunktion F für y=0 mit der Dimension N. Als Abweichungen werden die unbekannten Transmissivitäten der optischen Sensoren eingesetzt.
Aus Gleichung (1) ergibt sich die Flammentemperatur des k-ten Brenners (Bk) anhand seiner Intensität $I_k$ der Chemilumineszenz zu:

$$(8) \qquad T_k = T^0 + \tau \ln(I_k) - \tau \ln(A_k \cdot \Phi^0) .$$

Wird als gemessene Temperatur

$$(9) \qquad T_k' = T^0 + \tau \ln(I_k)$$

verwendet, so kann der letzte Term rechts in Gleichung (8) der Systemfunktion F von Gleichung (7) zugeschlagen werden:

$$(10) \qquad T_k' = T^r + a \cdot (q(s_k) - q(s^r)) + \tau \cdot y_k = F_k'(s_k) \ \text{mit} \ y_k = \ln(A_k \Phi^0)$$

Die zu lösende Kalibrierungsfunktion für F' ergibt sich nun als Summe über die verschiedenen Messungen i, und Summe über jeden Brenner k der Intensitäten $I_k^i$, welche bei den Stellwerten $S_k^i$ bestimmt wurden:

$$(11) \qquad \chi^2(y) = \sum_{i=1}^{n} \sum_{k=1}^{N} \left( y_{N+1} + y_{N+2} \cdot q(s_k^i) + y_k - \ln(I_k^i) \right)^2$$

wobei $y_{N+1}$ die folgenden Terme, welche nicht linear voneinander unabhängig sind, zusammenfasst

$$(12) \qquad y_{N+1} = \frac{T^r - a \cdot q(s^r) - T^0}{\tau},$$

und $y_{N+2}$ die beiden Unbekannten $a$ und $\tau$, welche nur zusammen optimiert werden können, beschreibt:

$$(13) \qquad y_{N+2} = \frac{a}{\tau}.$$

Bei der Kalibrierungsgleichung (11) handelt es sich um einen linearen (L=N+2)-dimensionalen $X^2$-Anpassungstest, welcher mit bekannten linearen algebraischen Methoden nach den Kalibrierungswerten $y^{min}$ aufgelöst werden kann.

Sobald das System kalibriert ist, respektive die $y_k^{min}$ bekannt sind, können die Ventilpositionen bestimmt werden. Hierzu muss die Homogenisierungsbedingung identischer Flammentemperaturen $T^h$ im N-dimensionalen $X^2$-Anpassungstest für S definiert werden:

$$(14) \qquad \chi^2(s) = \sum_{k=1}^{N} \left( \frac{F_k(s) - T^h}{\tau} \right)^2 = \sum_{k=1}^{N} \left( \frac{T^r + a \cdot (q(s_k) - q(s^r)) - T^h}{\tau} \right)^2.$$

Mit Gleichung (12) und (13) folgt:

$$(15) \qquad \chi^2(s) = \sum_{k=1}^{N} \left( y_{N+1}^{min} + \frac{T^0 - T^h}{\tau} + y_{N+2}^{min} \cdot q(s_k) \right)^2.$$

Dieser $X^2$-Anpassungstest hat die Lösung:

$$(16) \qquad q(s_k) = \frac{T^h - T^0}{a} - \frac{y_{N+1}^{min}}{y_{N+2}^{min}}.$$

Dies sind die zu wählenden Durchflusswerte für die Ventile V1,..,V3,..,Vm-2,..,Vm, welche die Flammentemperaturen der Brenner B1,..,Bn bestmöglich auf die Temperatur $T^h$ homogenisieren. Aus der bekannten Kennlinie des Ventils (Gleichung (6)) kann schlussendlich der gesuchte Stellwert $S_k$ berechnet werden.

Es sei darauf hingewiesen, dass bei diesem Beispiel tatsächlich die zu erwartende Lösung herauskommt. Gemäss den getroffenen Annahmen ergeben sich die Flammentemperaturen direkt aus dem Durchfluss der Ventile V1,..,V3,..,Vm-2,..,Vm. Eine gegenseitige Abhängigkeit oder Korrelation zwischen den Brennern B1,..,Bn fehlt, weshalb die obige Lösung auch für jeden Brenner separat von der Systemfunktion (7) abgeleitet werden kann. Die Kalibrierung dieses einfachen Systems entspricht deshalb eher einer Eichung der Intensitätsmessung anhand der Ventilstellungen, die ja die Flammentemperatur eines einzelnen Brenners eindeutig bestimmt.

Im Allgemeinen ist dies nicht der Fall, da die Brenner untereinander über den Luftstrom oder das Brennstoffverteilsystem miteinander korreliert sind. Dennoch kann auch bei korrelierten Brennern die Kalibrierung der Flammentemperatur über die Variation der Regeleinheiten durchgeführt werden. Als Resultat dieses vereinfachten Beispiels ergibt sich die Grundlage für die Idee eines intensitätsunabhängigen Rekalibrierungsverfahrens auf der Grundlage der Durchflusskennlinie der Stellglieder, welches es erlaubt, die Intensitätsmessung der Chemilumineszenz durch eine generische Ventilkennlinie zu kalibrieren. Weiterhin kann diese Idee mit der Optimierung zusammengefasst werden zu einer Flammenhomogenisierung, welche bei bekannten Kennlinien der Stellglieder durch reine Intensitätsmessungen der Chemilumineszenz durchgeführt werden. Diese Vereinfachung ist ersichtlich aus der Gleichung (11).

Insgesamt werden die folgenden Lösungen für ein Mehrfachbrennersystem vorgeschlagen:

1. Eine schnelle Flammentemperaturbestimmung basierend auf einer Berechnung der Temperatur anhand der schnell zu messenden Chemilumineszenzintensität und einer periodischen Rekalibrierung mit einem intensitätsunabhängigen Verfahren.

2. Eine beschleunigte Flammenhomogenisierung basierend auf einer Systemanalyse und einem hieraus abgeleiteten, numerischen Optimierungsverfahren.

3. Die Kombination der schnellen Flammentemperaturmessung mit dem beschleunigten Optimierungsverfahren zur Harmonisierung von Systemen mit mehreren Brennern.

4. Die Kombination der schnellen Flammentemperaturmessung mit dem beschleunigten Optimierungsverfahren zur Regelung von Systemen mit mehreren Brennern.

5. Ein intensitätsunabhängiges Rekalibrierungsverfahren basierend auf der Durchflusskennlinie der Stellglieder.

6. Ein Verfahren zur Flammenhomogenisierung von Systemen mit mehreren Brennern anhand der Intensitätsmessung der Chemilumineszenz, basierend auf den Durchflusskennlinien der Stellglieder.

BEZUGSZEICHENLISTE

| | |
|---|---|
| 10 | Verbrennungsvorrichtung |
| 11 | Brennkammer |
| 12 | Temperaturmesseinrichtung (intensitätsunabhängig) |
| 13 | Temperaturmesseinrichtung (Chemilumineszenzintensität) |
| 14 | Abgasauslass |
| 15 | Brennstoffregeleinrichtung (autonom) |
| 16 | Brennstoffzufuhr |
| 17 | Steuerung |
| 18 | Brennstoffverteilsystem |
| V1,..,Vm | Stellglied (zur Durchflussregelung) |
| B1,..,Bn | Brenner |
| F1,..,Fn | Flamme |
| M1,..,M3 | Messeinrichtung |

**Patentansprüche**

1. Verfahren zum Betrieb einer Verbrennungsvorrichtung (10), welche wenigstens eine Brennkammer (11) mit mehreren parallel arbeitenden Brennern (B1,..,Bn) umfasst, die jeweils eine in die Brennkammer (11) hineinreichende Flamme (F1,..,Fn) erzeugen, wobei jeder der Brenner (B1,..,Bn) über ein Brennstoffverteilsystem (18) aus einer Brennstoffzufuhr (16) mit einem Brennstoff versorgt wird, welches Brennstoffverteilsystem (18) Stellglieder (V1,.., Vm) zur manuellen oder gesteuerten Regulierung der Brennstoffzufuhr und/oder Brennstoffzusammensetzung von einzelnen Brennern (B1,..,Bn) und/oder Gruppen von Brennern (B1,..,B3; Bn-2,..,Bn) umfasst, **dadurch gekennzeichnet, dass** die Verbrennungsvorrichtung (10) eineMesseinrichtung (M1) zur Bestimmung der Eigenschaften des Brennstoffes wie Temperatur, Druck, Dichte, Durchfluss, Zähigkeit, Wärmeleitfähigkeit und Zusammensetzung ausweist, die Verbrennungsvorrichtung (10) eine Brennstoffregeleinrichtung (15) zur autonomen Regelung der Eigenschaften des Brennstoffes wie Durchfluss, Druck, Temperatur oder Zusammensetzung aufweist und zur schnellen Optimierung bzw. Homogenisierung der Verbrennungsvorrichtung (10) eine Funktion (F) der Flammentemperaturen der Brenner (B1,..,Bn) in Abhängigkeit von den Positionen der Stellglieder (V1,..,Vm) des Brennstoffverteilsystems (18) bereitgestellt wird, welche eine analytische Funktion F der Art T=F(s,x,y) ist, wobei T einen N-dimensionalen Vektor bezeichnet, der die Flammentemperaturen der einzelnen Brenner enthält, der M-dimensionale Vektor s die Positionen der Stellglieder enthält, der K-dimensionale Vektor x die Messwerte der Messeinrichtung sowie die Regelwerte der autonomen Brenstoffregeleinrichtung beinhaltet und der L-dimensionale Vektor y geschätzte Abweichungen enthält, und welche Funktion (F) durch Messungen der Flammentemperaturen bei mehreren vorgegebene Positionen der Stellglieder (V1,..,Vm) des Brennstoffverteilsystems (18) kalibriert worden ist, und dass mit Hilfe der kalibrierten Funktion (F) die für eine vorgegebene Verteilung der Flammentemperaturen der Brenner (B1,..,Bn) optimalen Positionen der Stellglieder (V1,..,Vm) des Brennstoffverteilsystems (18) ermittelt und eingestellt werden.

2. Verfahren nach Anspruch 1, **dadurch gekennzeichnet, dass** jedem Brenner (B1,..,Bn) im Brennstoffverteilsystem (18) ein Ventil (V1,..,Vm) mit einer festen Kennlinie vorgeschaltet ist, und dass zur Ermittlung der Funktion (F) die zu erwartende Flammentemperatur des jeweiligen Brenners (B1,..,Bn) als proportional zum Brennstoffzufluss durch das ihm vorgeschaltete Ventil angenommen wird.

3. Verfahren nach Anspruch 1, **dadurch gekennzeichnet, dass** zunächst die Flammentemperaturen der Flammen (F1,..,Fn) der einzelnen Brenner (B1,..,Bn) gemessen werden, und dass nach Massgabe der gemessenen Flammentemperaturen die Verbrennungsvorrichtung (10) homogenisiert wird.

4. Verfahren nach Anspruch 1, **dadurch gekennzeichnet, dass** zunächst die Flammentemperaturen der Flammen (F1,..,Fn) der einzelnen Brenner (B1,..,Bn) gemessen werden, und dass nach Massgabe der gemessenen Flammentemperaturen die Verbrennungsvorrichtung (10) optimiert wird.

5. Verfahren nach Anspruch 1, **dadurch gekennzeichnet, dass** zunächst die Flammentemperaturen der Flammen (F1,..,Fn) der einzelnen Brenner (B1,..,Bn) gemessen werden, und dass nach Massgabe der gemessenen Flammentemperaturen die Verbrennungsvorrichtung (10) im Hinblick auf eine fortlaufende Optimierung geregelt wird.

6. Verfahren nach Anspruch 4 oder 5, **dadurch gekennzeichnet, dass** die Flammentemperaturen der Flammen (F1,.., Fn) der einzelnen Brenner (B1,..,Bn) über eine Messung der Chemilumineszenzintensität bestimmt werden.

7. Verfahren nach Anspruch 6, **dadurch gekennzeichnet, dass** die Messung der Chemilumineszenzintensität in periodischen Zeitabständen durch eine intensitätsunabhängiges Verfahren zur Messung der Flammentemperatur rekalibriert wird.

8. Verfahren nach Anspruch 7, **dadurch gekennzeichnet, dass** als intensitätsunabhängiges Rekalibrierungsverfahren ein Verfahren zur Messung der Flammentemperatur verwendet wird, welches auf einer Durchflusskennlinie der für den Brennstoffdurchfluss verantwortlichen Stellglieder beruht.

9. Verbrennungsvorrichtung (10) zur Durchführung des Verfahrens nach einem der Ansprüche 1 bis 8 welche Verbrennungsvorrichtung (10) eine Brennkammer (11) mit mehreren parallel arbeitenden Brennern (B1,..,Bn) umfasst, die jeweils eine in die Brennkammer (11) hineinreichende Flamme (F1,..,Fn) erzeugen, wobei jeder der Brenner (B1,..,Bn) über ein Brennstoffverteilsystem (18) an eine Brennstoffzufuhr (16) angeschlossen ist, welches Brennstoffverteilsystem (18) Stellglieder (15; V1,..,Vn) zur manuellen oder gesteuerten Regulierung der Brennstoffzufuhr und/oder Brennstoffzusammensetzung von einzelnen Brennern (B1,..,Bn) und/oder Gruppen von Brennern (B1,..., B3; Bn-2,..,Bn) umfasst, **dadurch gekennzeichnet, dass** die Stellglieder (15; V1,..,Vn) von einer Steuerung (17) nach Massgabe einer Funktion (F) der Flammentemperaturen der Brenner (B1,..,Bn) in Abhängigkeit von den Positionen der Stellglieder (15; V1,..,Vn) des Brennstoffverteilsystems (18) gesteuert werden, welche Funktion (F) eine analytische Funktion der Art T=F(s,x,y) ist, wobei T einen N-dimensionalen Vektor bezeichnet, der die Flammentemperaturen der einzelnen Brenner enthält, der M-dimensionale Vektor s die Positionen der Stellglieder enthält, der K-dimensionale Vektor x die Messwerte der Messeinrichtung sowie die Regelwerte der autonomen Brennstoffregeleinrichtung beinhaltet und der L-dimensionale Vektor y geschätzte Abweichungen enthält.

10. Verbrennungsvorrichtung nach Anspruch 9, **dadurch gekennzeichnet, dass** das Brennstoffverteilsystem (18) eine Brennstoffmesseinrichtung (14) zur Bestimmung der Eigenschaften des Brennstoffes wie Temperatur, Druck, Dichte, Durchfluss, Zähigkeit, Wärmeleitfähigkeit und Zusammensetzung und eine Brennstoffregeleinrichtung (15) zur autonomen Regelung der Eigenschaften des Brennstoffes wie Durchfluss, Druck, Temperatur oder Zusammensetzung aufweist, welche mit der Steuerung (17) verbunden sind.

**11.** Verbrennungsvorrichtung nach Anspruch 9 oder 10, **dadurch gekennzeichnet, dass** jedem der Brenner (B1,..,Bn) als Stellglied ein Ventil (V1 ,..,Vn) zur Einstellung des Brennstoffdurchflusses zum zugehörigen Brenner zugeordnet ist, und dass die Ventile (V1 ,..,Vn) mit der Steuerung (17) verbunden sind.

## Claims

**1.** Method for operating a combustion device (10), which comprises at least one combustion chamber (11) with a plurality of burners (B1,..,Bn) operating in parallel which produce in each case a flame (F1,..,Fn) which reaches into the combustion chamber (11), wherein each of the burners (B1,..,Bn), via a fuel distribution system (18), is supplied with a fuel from a fuel supply (16), which fuel distribution system (18) comprises control elements (V1,..,Vm) for manual or controlled regulating of the fuel supply and/or fuel composition of individual burners (B1,..,Bn) and/or groups of burners (B1,..,B3; Bn-2,..,Bn), **characterized in that** the combustion device (10) has a measuring device (M1) for determining the properties of the fuel, such as temperature, pressure, density, throughflow, viscosity, thermal conductivity and composition, the combustion device (10) has a fuel control device (15) for the autonomous controlling of the properties of the fuel, such as throughflow, pressure, temperature or composition, and for quick optimization or homogenization of the combustion device (10) a function (F) of the flame temperatures of the burners (B1,..,Bn) is provided in dependence upon the positions of the control elements (V1,..,Vm) of the fuel distribution system (18), which is an analytical function F of the type T=F(s,x,y), where T refers to an N-dimensional vector which includes the flame temperatures of the individual burners, the M-dimensional vector s includes the positions of the control elements, the K-dimensional vector x includes the measured values of the measuring device and also the control values of the autonomous fuel control device and the L-dimensional vector y includes estimated deviations, and which function (F) has been calibrated by means of measurings of the flame temperatures at a plurality of predetermined positions of the control elements (V1,..,Vm), and **in that** by means of the calibrated function (F) the positions of the control elements (V1,..,Vm) of the fuel distribution system (18) which are optimum for a predetermined distribution of the flame temperatures of the burners (B1,..,Bn) are determined and adjusted.

**2.** Method according to Claim 1, **characterized in that** a valve (V1,..,Vm) with a fixed characteristic is connected upstream of each burner (B1,..,Bn) in the fuel distribution system (18), and **in that** for determining the function (F) the anticipated flame temperature of the respective burner (B1,..,Bn) is assumed as being proportional to the fuel inflow through the valve which is connected upstream of it.

**3.** Method according to Claim 1, **characterized in that** the flame temperatures of the flames (F1,..,Fn) of the individual burners (B1,..,Bn) are first measured, and **in that** the combustion device (10) is homogenized in accordance with the measured flame temperatures.

**4.** Method according to Claim 1, **characterized in that** the flame temperatures of the flames (F1,..,Fn) of the individual burners (B1,..,Bn) are first measured, and **in that** the combustion device (10) is optimized in accordance with the measured flame temperatures.

**5.** Method according to Claim 1, **characterized in that** the flame temperatures of the flames (F1,..,Fn) of the individual burners (B1,..,Bn) are first measured, and **in that** the combustion device (10) is controlled with regard to a continuous optimization in accordance with the measured flame temperatures.

**6.** Method according to Claim 4 or 5, **characterized in that** the flame temperatures of the flames (F1,..,Fn) of the individual burners (B1,..,Bn) are determined via a measuring of the intensity of the chemiluminescence.

**7.** Method according to Claim 6, **characterized in that** the measuring of the intensity of the chemiluminescence is recalibrated at periodic intervals of time by means of an intensity-independent method for measuring the flame temperature.

**8.** Method according to Claim 7, **characterized in that** a method for measuring the flame temperature, which is based on a throughflow characteristic of the control elements which are responsible for the fuel throughflow, is used as the intensity-independent recalibration method.

**9.** Combustion device (10) for carrying out the method according to one of Claims 1 to 8, which combustion device (10) comprises a combustion chamber (11) with a plurality of burners (B1,..,Bn) operating in parallel which produce in each case a flame (F1,..,Fn) which reaches into the combustion chamber (11), wherein each of the burners (B1,..,

Bn), via a fuel distribution system (18), is connected to a fuel supply (16), which fuel distribution system (18) comprises control elements (15; V1,..,Vn) for manual or controlled regulating of the fuel supply and/or fuel composition of individual burners (B1,..,Bn) and/or groups of burners (B1,..,B3; Bn-2,..,Bn), **characterized in that** the control elements (15; V1,..,Vn) are controlled by a control unit (17) in accordance with a function (F) of the flame temperatures of the burners (B1,..,Bn) in dependence upon the positions of the control elements (15; V1,..,Vn) of the fuel distribution system (18), which function (F) is an analytical function of the type T=F(s,x,y), where T refers to an N-dimensional vector which includes the flame temperatures of the individual burners, the M-dimensional vector s includes the positions of the control elements, the K-dimensional vector x includes the measured values of the measuring device and also the control values of the autonomous fuel control device and the L-dimensional vector y includes estimated deviations.

10. Combustion device according to Claim 9, **characterized in that** the fuel distribution system (18) has a fuel measuring device (14) for determining the properties of the fuel, such as temperature, pressure, density, throughflow, viscosity, thermal conductivity and composition, and a fuel control device (15) for the autonomous controlling of the properties of the fuel, such as throughflow, pressure, temperature or composition, which components are connected to the control unit (17).

11. Combustion device according to Claim 9 or 10, **characterized in that** as a control element a valve (V1,..,Vn) for adjusting the fuel throughflow to the associated burner is associated with each of the burners (B1,..,Bn), and **in that** the valves (V1,..,Vn) are connected to the control unit (17).

## Revendications

1. Procédé pour faire fonctionner un dispositif de combustion (10) comprenant au moins une chambre de combustion (11) pourvue de plusieurs brûleurs (B1,..,Bn) travaillant en parallèle et produisant respectivement une flamme (F1,.., Fn) pénétrant la chambre de combustion (11), chacun des brûleurs (B1,..,Bn) étant alimenté en combustible provenant d'une amenée de combustible (16) par le biais d'un système de répartition de combustible (18), ledit système de répartition de combustible (18) comprenant des maillons de réglage (V1,..,Vm) permettant de réguler de façon manuelle ou commandée l'amenée de combustible et/ou la composition de combustible des brûleurs (B1,..,Bn) individuels et/ou des groupes de brûleurs (B1,..,B3 ; Bn-2,..,Bn), **caractérisé en ce que** le dispositif de combustion (10) comporte un dispositif de mesure (M1) permettant de déterminer les propriétés du combustible telles que la température, la pression, la densité, le débit, la fluidité, la conductivité thermique et la composition, le dispositif de combustion (10) comportant un dispositif de réglage de combustible (15) pour régler de façon indépendante les propriétés du combustible telles que le débit, la pression, la température ou la composition et une fonction (F) corrélant les températures de flamme des brûleurs (B1,..,Bn) en fonction des positions des maillons de réglage (V1,..,Vm) du système de répartition de combustible (18) étant mise à disposition pour optimiser et/ou homogénéiser rapidement le dispositif de combustion (10), ladite fonction étant une fonction analytique F du type T=F(s,x,y), T désignant un vecteur dans la dimension N contenant les températures de flamme des brûleurs individuels, le vecteur s dans la dimension M contenant les positions des maillons de réglage et le vecteur x dans la dimension K contenant les valeurs de mesure du dispositif de mesure ainsi que les valeurs de réglage du dispositif de réglage de combustible indépendant et le vecteur y dans la dimension L contenant des écarts, et ladite fonction (F) étant étalonnée par des mesures des températures de flamme dans plusieurs positions prédéfinies des maillons de réglage (V1,..,Vm) du système de répartition de combustible (18) et que les positions des maillons de réglage (V1,..,Vm) du système de répartition de combustible (18) optimales pour une répartition prédéfinie des températures de flamme des brûleurs (B1,..,Bn) étant calculées et réglées à l'aide de la fonction (F) étalonnée.

2. Procédé selon la revendication 1, **caractérisé en ce que** pour déterminer la fonction (F), une soupape (V1,..,Vm) dotée d'une courbe caractéristique fixe est connectée en amont de chaque brûleur (B1,..,Bn) dans le système de répartition de combustible (18) et que la température de flamme attendue du brûleur respectif (B1,..,Bn) est prise proportionnellement au flux entrant de carburant par la soupape connectée en amont dudit brûleur.

3. Procédé selon la revendication 1, **caractérisé en ce que** les températures de flamme des flammes (F1,..,Fn) des brûleurs individuels (B1,..,Bn) sont d'abord mesurées et que le dispositif de combustion (10) est homogénéisé au prorata des températures de flamme mesurées.

4. Procédé selon la revendication 1, **caractérisé en ce que** les températures de flamme des flammes (F1,..,Fn) des brûleurs individuels (B1,..,Bn) sont d'abord mesurées et que le dispositif de combustion (10) est optimisé au prorata des températures de flamme mesurées.

5. Procédé selon la revendication 1, **caractérisé en ce que** les températures de flamme des flammes (F1,..,Fn) des brûleurs individuels (B1,..,Bn) sont d'abord mesurées et que le dispositif de combustion (10) est réglé au prorata des températures de flamme mesurées en vue de réaliser une optimisation continue.

6. Procédé selon la revendication 4 ou 5, **caractérisé en ce que** les températures de flamme des flammes (F1,..,Fn) des brûleurs individuels (B1,..,Bn) sont déterminées par le biais de la mesure de l'intensité de la luminescence chimique.

7. Procédé selon la revendication 6, **caractérisé en ce que** la mesure de l'intensité de la luminescence chimique est réétalonnée à instants fixes dans le temps par le biais d'un procédé indépendant de l'intensité en vue de mesurer la température de flamme.

8. Procédé selon la revendication 7, **caractérisé en ce que** le procédé de réétalonnage indépendant de l'intensité utilise un procédé de mesure de la température de flamme reposant sur une courbe caractéristique de débit des maillons de réglage responsables du débit du combustible.

9. Dispositif de combustion (10) servant à mettre en oeuvre le procédé selon l'une quelconque des revendications 1 à 8, ledit dispositif de combustion (10) comprenant une chambre de combustion (11) pourvue de plusieurs brûleurs (B1,..,Bn) travaillant en parallèle et produisant respectivement une flamme (F1,..,Fn) pénétrant la chambre de combustion (11), chacun des brûleurs (B1,..,Bn) étant raccordé à une amenée de combustible (16) par le biais d'un système de répartition de combustible (18), ledit système de répartition de combustible (18) comprenant des maillons de réglage (15 ; V1,..,Vm permettant de réguler de façon manuelle ou commandée l'amenée de combustible et/ou la composition de combustible des brûleurs (B1,..,Bn) individuels et/ou des groupes de brûleurs (B1,..,B3 ; Bn-2,.., Bn), **caractérisé en ce que** les maillons de réglage (15 ; V1,..,Vn) sont commandés par un élément de commande (17) au prorata d'une fonction (F) corrélant les températures de flamme des brûleurs (B1,..,Bn) en fonction des positions des maillons de réglage (15 ; V1,..,Vn) du système de répartition de combustible (18), ladite fonction (F) étant une fonction analytique du type T=F(s,x,y), T désignant un vecteur dans la dimension N contenant les températures de flamme des brûleurs individuels, le vecteur s dans la dimension M contenant les positions des maillons de réglage et le vecteur x dans la dimension K contenant les valeurs de mesure du dispositif de mesure ainsi que les valeurs de réglage du dispositif de réglage de combustible indépendant et le vecteur y dans la dimension L contenant des écarts.

10. Dispositif de combustion selon la revendication 9, **caractérisé en ce que** le système de répartition de combustible (18) comporte un dispositif de mesure de combustible (14) permettant de déterminer les propriétés du combustible telles que la température, la pression, la densité, le débit, la fluidité, la conductivité thermique et la composition et un dispositif de réglage de combustible (15) permettant de régler de façon indépendante les propriétés du combustible telles que le débit, la pression, la température ou la composition, lesdits dispositifs étant reliés à l'élément de commande (17).

11. Dispositif de combustion selon la revendication 9 ou 10, **caractérisé en ce qu'**une soupape (V1,..,Vn) servant au réglage du débit du combustible par rapport au brûleur associé est associée à chacun des brûleurs (B1,..,Bn) prenant la forme d'un maillon de réglage et que les soupapes (V1,..,Vn) sont reliées à l'élément de commande (17).

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005010437 A1
- US 6318891 A
- US 5670784 A
- EP 0529900 A
- US 2004011052 A
- WO 0052315 A